Europäisches Patentamt

(19) European Patent Office

Office européen des brevets

(11) Publication number: **0 102 390**
**B1**

(12) **EUROPEAN PATENT SPECIFICATION**

(45) Date of publication of patent specification: **16.06.87**

(51) Int. Cl.⁴: **G 01 F 23/28**

(21) Application number: **83901933.8**

(22) Date of filing: **04.03.83**

(86) International application number:
**PCT/GB83/00066**

(87) International publication number:
**WO 83/03135 15.09.83 Gazette 83/21**

(54) **FLUID LEVEL SENSING APPARATUS.**

(30) Priority: **04.03.82 GB 8206469**

(43) Date of publication of application:
**14.03.84 Bulletin 84/11**

(45) Publication of the grant of the patent:
**16.06.87 Bulletin 87/25**

(84) Designated Contracting States:
**BE DE FR GB NL**

(56) References cited:
**EP-A-0 014 301**
**EP-A-0 024 527**
**DE-B-1 207 103**

(73) Proprietor: **Kent Scientific Industrial Projects
Limited
The Physics Laboratory
The University Canterbury
Canterbury Kent CT2 7NR (GB)**

(72) Inventor: **JACKSON, David Alfred
8 Woodland Way Canterbury
Kent (GB)**

(74) Representative: **Warren, Keith Stanley et al
BARON & WARREN 18 South End Kensington
London W8 5BU (GB)**

Courier Press, Leamington Spa, England.

## Description

The present invention relates to fluid level sensing and, more particularly, to such apparatus for sensing or measuring the level of the surface of a fluid in a tank, reservoir or other container relatively to a reference point or datum located above the fluid. For example, the invention may be used for sensing or measuring the level of oil or other liquid contained in storage tanks, ships tanks or the tanks of other vehicles.

There are many well-known installations available for measuring the level of a fluid surface relative to some fixed reference or datum point. Most, although not all, of these installations require the use of some form of sensing device in physical contact with the surface of the fluid. If the sensing device requires for its operation, or if it produces, an electrical signal there is always the risk of an explosion when the device is used in an hazardous environment. Where the use of a mechanical sensor in physical contact with a fluid surface is undesirable or impossible, installations having optical sensing systems have been utilised. For example, EP—A—0024527 describes one such installation for monitoring and controlling the surface level of the molten metal in the ingot mould of a continuous casting plant. It comprises an electro-optical system which projects light pulses in a parallel beam and perpendicularly onto the molten metal surface, recovers reflected pulses and measures the transit time of the light pulses, thereby to monitor the surface level and produce electrical signals for controlling operation of the casting plant so as to maintain the molten metal at a required level in the mould. The incident and reflective light pulses may be transmitted from and to the light pulse source and the photodetector of the system via optical fibres.

Other optical level sensing systems are described in DE—B—1207103 and EP—A—0014301. DE—B—1207103 describes such a system in which light from a light source consisting of two identical light-emitting devices, which are alternately illuminated at a predetermined frequency, is reflected from a fluid surface, whose level is to be measured, onto a slit in a screen. A photodetector is located behind the slit and the slit is so arranged that, upon changes in the fluid surface level from a predetermined surface level, each of the reflected images of the light emitting devices is covered to a greater or lesser extent. The resulting electrical signals produced by the photodetector are processed by a device which responds to the frequency of the alternating light emission and which produces signals identifying changes in fluid level relative to the reference level.

EP—A—0014301 describes an optical fluid level sensing system in which light is projected perpendicularly onto the fluid surface and reflected light is transmitted along an optical axis inclined to the optical axis of the incident light and is sensed by a positional photodetector which produces an electrical signal corresponding to the position at which the reflected light impinges on the detector. This electrical signal is processed to indicate the level of the fluid surface. The specification mentions that the system may be operated with intensity or frequency modulated monochromatic light and synchronised reception.

An object of the present invention is to provide a fluid level sensing apparatus which utilises an optical system for producing an accurate measurement of the level of a fluid surface below a reference or datum position.

The present invention consists in fluid level sensing apparatus comprising a light source, optical projection and collection means for projecting a light signal derived from the light source downwardly onto the surface of a fluid in a substantially parallel beam and substantially perpendicularly to the surface and for collecting the light signal reflected from said fluid surface, and means for processing the light signals so as to monitor the level of the fluid surface, characterised in that the light source is an amplitude modulated light source for producing a continuous amplitude modulated light signal, in that the projection and collection means comprises a beam splitter arranged to direct a fraction of the input light supplied from the amplitude modulated light souce onto the fluid surface and transmit another fraction of said input light, lens means disposed substantially coaxially with the beam splitter and arranged to collect light reflected from the fluid surface and focus the reflected light into a first output optical fibre, and means for focussing the fraction of the input light transmitted by the beam splitter into a second output optical fibre, and in that the processing means comprises comparing means for determining the optical phase difference between the reflected light and the transmitted fraction of the input light, whereby to produce a measurement of the level of the fluid surface below the projection and collection means, said output optical fibres being adapted to transmit the reflected and transmitted input light to the processing means along light paths of substantially equal lengths.

The invention utilises a method of measuring the level of a fluid surface which is an absolute method and consequently provides considerably more accurate results than currently available fluid level sensors. Also, it requires no electrical energy or signals in the vicinity of a fluid container, thereby making the apparatus inherently safe for use with any type of fluid.

The amplitude modulation of the light source effectively changes the wavelength of the light and the modulation wavelength utilised depends on the range of measurement desired. For example, if the modulation frequency is 100 MHz, the wavelength is 3 metres and because the light traverses the distance between the reference position, that is, the projecting and collecting means, and the fluid surface twice, such a wavelength is effective to sense a fluid level which is not greater than 1.5 metres below the reference position. If the fluid surface is at a greater distance from the reference position than 1.5 metres, the distance cannot be measured uniquely with an effective wavelength of 3 metres. This problem is overcome by reducing the modulation frequency. Hence, at 10 MHz the range becomes 15 metres and at 1 MHz it is 150 metres. The precision of the level measurement depends on the accuracy with which the difference in optical phase can be electronically measured and, in one embodiment of the invention, this has been found to be of the order of 0.1°. The latter is equivalent to an accuracy of 0.4 mm at 100 MHz and 4 cms at 1 MHz. Thus, to ensure both accuracy and non-ambiguity in the range of measurement, the apparatus is preferably designed to operate at two different modulation frequencies.

Preferably, light from the amplitude modulated light source is transmitted to the projection and collection means via an input optical fibre. The use of optical fibres to transmit the input and output light signals to and from the optical projection and collection means enables the electrical power source and components of the apparatus to be disposed remotely from the optical projection and collection system so that there is no requirement for the former to be in the vicinity of a fluid container, and the apparatus of the invention is therefore especially suitable for use in monitoring the level of hazardous fluids, such as oil. The projecting and collection optics may be designed to be small in weight and dimensions and may be incorporated in a single robust maintenance-free unit or head which may be located at or adjacent the top of the fluid container. In applications, such as ships and other vehicles, where the fluid level may not be normal to the projected light beam, the optical unit or head may be mounted in a suitable form of gimbal which is free to move under gravitational forces to ensure that the projected beam is normal to the fluid surface to be detected.

The electronic components of the comparing means may comprise photodetector means for producing electrical signals corresponding to the reflected and transmitted light, and means for processing the resulting electrical signals to determine the phase difference and, hence, the level of the fluid surface below the projecting means. Such processing means may comprise a first oscillator for modulating the light source, a second oscillator for producing a second signal having a frequency close to the modulating frequency of the first oscillator, means for mixing the second signal with the electrical signals produced by the photodetector means, whereby to preserve the phase difference between the detected signals whilst converting the latter into lower-frequency signals, and comparator means for comparing the mixed detected signals with a reference signal derived from mixing the two oscillator signals. Preferably, the oscillators are selectively adjustable to permit alteration of the modulation frequency in dependence upon the range of fluid levels to be sensed.

If the fluid surface to be sensed is insufficiently reflective, a satisfactory reflected beam may be obtained with the aid of a float incorporating reflecting means. This float is floated on the fluid surface in a suitable position below the projecting and collection means and is constrained to move in a substantially vertical direction as the fluid level changes, for example, by being guided in a tube.

If the fluid to be sensed is transparent or translucent to the projected beam, the invention can also be used to detect the level of an interface between the fluid and a denser fluid, such as, a contaminating fluid, below the first-mentioned fluid. To this end, the apparatus may include at least one additional projecting means for projecting and collection a second beam of amplitude modulated light towards the fluid surface, and for collecting the light reflected from an interface between the first-mentioned fluid and the second denser fluid, the comparing means being arranged to compare the optical phase of the modulated light reflected from the interface with that of the transmitted input light from the light source so as to monitor the level of the second fluid relatively to the additional projecting and collection means. The relfection of light at the interface may be enhanced by the use of a reflective float adapted to float on the second fluid.

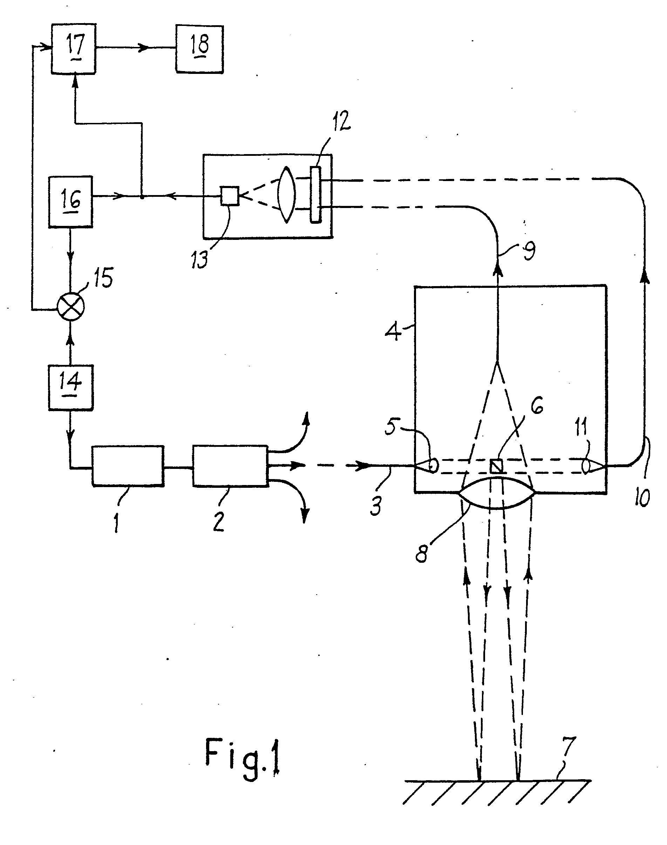

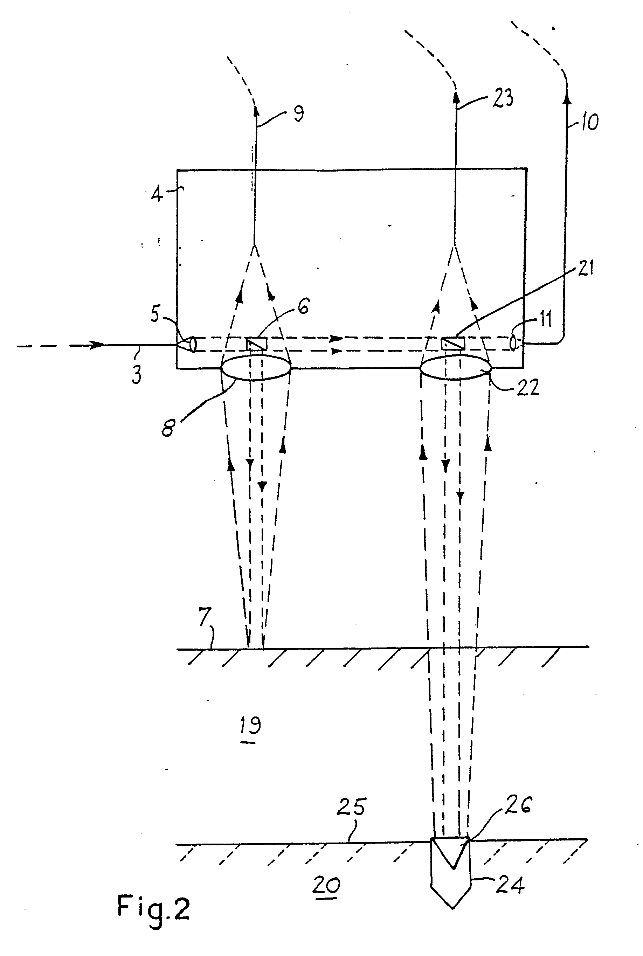

In order that the invention may be more readily understood, reference will now be made to the accompanying drawings, in which Figures 1 and 2 schematically illustrate two different embodiments of the invention.

Referring to Figure 1 of the drawings, the apparatus comprises a light source 1, such as a laser light source or light emitting diode, which is amplitude modulated, as will hereinafter be more fully described, at a maximum frequency of 50 MHz, thereby to give the light source an effective wavelength of 6 metres rather than its true wavelength of $8 \times 10^{-7}$ metres. The output from the light source 1 is coupled into an optical fibre power dividing switch 2 which is used selectively to couple the light into several input multimode optical fibres 3. The opposite ends of these fibres are coupled to optical projecting and collecting heads 4 which are positioned in a plurality of liquid tanks, reservoirs or other containers, above the maximum permitted liquid levels, for monitoring the respective liquid levels, and which constitute the reference points from which the respective levels are measured. For simplicity, only one of the heads is illustrated in Figure 1 and it will be appreciated that the other heads are identical.

The input light beam emitted from the input optical fibre 3 associated with the head 4 is converted into a substantially parallel light beam by a lens 5 and is directed towards a small beam splitter 6 which projects a part of the input light beam towards the fluid surface 7 to be sensed. The light reflected from the fluid surface is collected by a suitably large aperture lens 8 mounted

coaxially with the beam splitter and is focussed into an output optical fibre 9. The lens and beam splitter assembly 8, 6 are designed so that no light can be reflected directly into the fibre 9.

To alleviate errors in the phase measurement due to arbitrary path length variations in the input light path, a second output fibre 10 is used to transmit unreflected light from the head 4 for subsequent comparison with the reflected light. Hence, the part of the input beam transmitted by the beam splitter 6 is focussed into the second output fibre 10 by a lens 11. The output fibres 9, 10 are closely coupled together and routed through common trunking.

The projecting and collection head 4 is constructed so as to be small in weight and dimensions, robust and essentially maintenance-free. By reason of the use of the optical fibres 3, 9, 10 to transmit light to and from the head 4, the electronic control and sensing components of the apparatus may be located remotely from the head.

The light from the light source 1, which is modulated at 50 MHz and is transmitted along the output fibres 9, 10, has travelled different distances, the difference being equal to twice the distance from the reference point, that is the beam splitter 6, to the surface 7 of the liquid. The optical signals returning along the output fibres 9, 10 are transmitted through a variable optical attenuator switch 12 which enables the optical signals to be sequentially sampled by a photodetector 13 which, in this embodiment, is an avalanche photo-diode. The purpose of the variable attenuator switch 12 is to adjust the level of the optical signal produced by the unreflected light in the output fibre 10 to the same intensity as that of the reflected beam transmitted by the output fibre 9 so as to reduce errors in the phase measurement. The relative phase between these electrical signals is measured in order to measure the level of the liquid surface 7.

The light source 1 is modulated by a crystal controlled programmable oscillator 14, the output from this oscillator being fed to the light source 1 and also to a double balanced mixer 15. The output from a second crystal controlled programmable oscillator 16 is connected to the mixer 15 and also to the output of the photodetector 13 for mixing with the output current of the latter. The connection to the photodetector output may either be effected directly or via another double balanced mixer.

The maximum frequency used for the oscillators 14, 16 is 50 MHz and 50.01 MHz, although higher frequencies may be employed if improved precision is required. Mixing of the electrical signals detected at the output of the photodetector 13 with the output signal of the oscillator 16 preserves the relative phase information whilst translating the electrical signal frequency to 10 KHz. The mixed detected signals are fed to a phase comparator 17 and are sequentially compared with the mixed oscillator signals supplied to the comparator via the mixer 15 in order to provide the measurement information. The phase comparator 17 is a conventional gated counter using the mixed oscillator signals as a stable oscillator reference. Using such a comparator, it has been found that the measurement of the relative phase between two corresponding points on signals derived from the output fibres 9, 10 can be measured to an accuracy of 1 part in $10^4$. This corresponds to a distance accuracy of $6 \times 10^{-4}$ metres, that is, 0.6 mm.

Typically, a microcomputer 18 is used to store the data from the phase comparator 17 and this microcomputer is also programmed to control the position of the variable attenuator switch 12 and the two frequencies at which the oscillators 14, 16 operate, the lowest frequency being determined from the known depth of the tank associated with the head 4.

Figure 2 illustrates a modification which can be used when the liquid 19 to be monitored is transparent to the projected light beam and it is desirable also to detect both the presence and approximate level (+ or − 0.5 cms) of a contaminating liquid 20, such as, water. In this embodiment, the projecting head 4 is modified so that two light beams are projected from the head. Hence, the part of the input beam transmitted by the beam splitter 6 is transferred to a second beam splitter 21 which projects part of this light beam towards the surface of the liquid. The remaining part of the beam passes through the beam splitter 21 and is coupled into the output optical fibre 10 by the lens 11, as in the previous embodiment. Reflected light resulting from the beam projected towards the liquids by the beam splitter 21 is collected by a suitably large aperture lens 22 disposed coaxially with the beam splitter 21 and is focussed into a third output optical fibre 23. The beam splitter and lens assembly 21, 22 is similar to the assembly 6, 8.

The first beam projected by the splitter 6 is used, as before, to measure the level of the surface 7 of the liquid 19 and the second beam produced by the splitter 21 is directed towards a float 24 designed to float only in the contaminated liquid 20 so that it is stable at the liquid-contaminant interface 25. The float is fitted with a retro-prism 26 and is constrained to move substantially vertically under the associated projected beam. The retro-prism reflects the beam back to the collecting lens 22 which transfers the optical signal along the optical fibre 23. This optical signal is processed in a similar manner to that described in the previous embodiment to allow the position of the float 24 relative to the beam splitter 21 to be determined from the optical phase difference between the light beams in the optical fibres 7, 23, thus enabling the height of the water contamination to be determined. The variable attenuator switch 12 in this embodiment is designed to accommodate three fibres instead of two, the position of the switch again being controlled by the microcomputer 18.

In applications such as oil storage tank farms, the microcomputer 18 may also be used to switch the optical power sequentially to the other optical input fibres 3 of the optical fibre switch 2 to enable the levels of other storage tanks to be sequentially measured.

Whilst particular embodiments have been described, it will be understood that modifications can be made without departing from the scope of the invention as defined by the appended claims. For example, whilst the optical signals returning along the output fibres 9, 10 are preferably transmitted through a variable optical attenuator switch 12, as described, enabling the optical signals to be sequentially sampled by a photodetector 13, alternatively, these optical signals may be directly detected by photo-diodes associated respectively with the fibres 9, 10. Whilst a float 24 is only shown as being used at the interface 25 between two liquids 19, 20, it will be appreciated that where unsatisfactory reflection of light is being obtained from the free surface of a liquid, a reflecting float, suitably constrained, may also be used at this surface to assist the sensing operation.

**Claims**

1. Fluid level sensing apparatus comprising a light source (1), optical projection and collection means (4) for projecting a light signal derived from the light source downwardly onto the surface (7) of a fluid in a substantially parallel beam and substantially perpendicularly to the surface (7) and for collecting the light signal reflected from said fluid surface, and means (12—17) for processing the light signals so as to monitor the level of the fluid surface, characterised in that the light source is an amplitude modulated light source (1) for producing a continuous amplitude modulated light signal, in that the projection and collection means comprises a beam splitter (6) arranged to direct a fraction of the input light supplied from the amplitude modulated light souce onto the fluid surface (7) and transmit another fraction of said input light, lens means (8) disposed substantially coaxially with the beam splitter (6) and arranged to collect light reflected from the fluid surface and focus the reflected light into a first output optical fibre (9), and means (11) for focussing the fraction of the input light transmitted by the beam splitter into a second output optical fibre (10), and in that the processing means comprises comparing means (17) for determining the optical phase difference between the reflected light and the transmitted fraction of the input light, whereby to produce a measurement of the level of the fluid surface (7) below the projection and collection means (4), said output optical fibres (9, 10) being adapted to transmit the reflected and transmitted input light to the processing means along light paths of substantially equal lengths.

2. Apparatus according to claim 1, characterised by an input optical fibre (3) coupling the amplitude modulated light source (1) to the projection and collection means (4), and lens means (5) cooperating with the input fibre for projecting a substantially parallel beam of input light onto the beam splitter (6).

3. Apparatus according to claim 1 or 2, characterised in that the processing means includes photodetector means (13) for producing electrical signals corresponding to the reflected and transmitted input light, and electronic means (14—17) for processing the resulting electrical signals to determine the optical phase differece and, hence, the level of the fluid surface below the projection and collection means.

4. Apparatus according to claim 3, characterised in that the electronic processing means comprises a first oscillator (14) for modulating the light source (1), a second oscillator (16) for producing a second signal having a frequency close to the modulating frequency of the first oscillator, means for mixing the second signal with the electrical signals produced by the photodetector means (13), whereby to preserve the phase difference between the detector signals whilst converting the latter into lower frequency signals, and comparator means (17) for comparing the mixed detector signals with a reference signal derived from mixing the two oscillator signals.

5. Apparatus according to any preceding claim, characterised by at least one additional projection and collection means (21, 22) for projecting a second beam of amplitude modulated light towards the fluid surface (7) and for collecting the light reflected from an interface (25) between the fluid (19) and a second denser fluid (20), said comparing means (17) being arranged to compare the optical phase of the modulated light reflected from the interface (25) with that of transmitted input light from the light source (1) so as also to monitor the level (25) of the second fluid relatively to the additional projection and collection means.

6. Apparatus according to claim 5, characterised in that said at least one additional projection and collection means comprises a second beam splitter (21) arranged to direct a fraction of the input light transmitted by the first beam splitter (6) towards the fluid surface, and second lens means (22) disposed substantially coaxially with the beam splitter (21) arranged to collect light reflected from the interface (25) and focus the reflected light into a third output optical fibre (23), said means (11) for focussing the transmitted fraction of input light into the second output optical fibre (10) being arranged to cooperate with the second beam splitter (21) and focus into said second output optical fibre (10) the fraction of input light transmitted by the second beam splitter, said third output optical fibre (23) being adapted to transmit the reflected light to the processing means along a light path substantially equal in length to the light paths defined by the first and second output optical fibres (9, 10).

7. Apparatus according to any preceding claim, characterised by a float (24) having reflecting means (26) and arranged to float on the fluid surface (7) and/or at the fluid interface (25) in a position below the associated projection and collection means (6, 8 or 21, 22) and constrained to move in a substantially vertical direction.

**Patentansprüche**

1. Vorrichtung zur Bestimmung eines Fluidpegels, enthaltend eine Lichtquelle (1), eine optische Projizier- und Sammeleinrichtung (4) zum Projizieren eines von der Lichtquelle abgeleiteten Lichtsignals nach unten auf eine Oberfläche (7) eines Fluides in Form eines im wesentlichen parallelen Strahles und im wesentlichen rechtwinklig zu der Oberfläche und zum Sammeln des von der Fluidoberfläche reflektierten Lichtsignals sowie Mittel (12—17) zum Verarbeiten des Lichtsignals, um den Pegel der Fluidoberfläche zu überwachen, dadurch gekennzeichnet, daß die Lichtquelle eine amplitudenmodulierte Lichtquelle (1) zum Erzeugen eines kontinuierlichen amplitudenmodulierten Lichtsignals ist, daß die Projizier- und Sammeleinrichtung einen Strahlenteiler (6) zum Richten eines Anteils des von der amplitudenmodulierten Lichtquelle abgeleiteten Eingangslichtes auf die Fluidoberfläche (7) und zum Durchlassen eines anderen Anteils des Eingangslichtes, Linsenmittel (8), die im wesentlichen koaxial zu dem Strahlenteiler (6) angeordnet sind, zum Sammeln des von der Fluidoberfläche reflektierten Lichtes und Fokussieren desselben in einen ersten optischen Ausgangsfiberleiter (9) sowie Linsenmittel (1) zum Fokussieren des Anteils des von dem Strahlenteiler durchgelassenen Eingangslichtes in einen zweiten optischen Ausgangsfiberleiter (10) umfassen, und daß die Verarbeitungsmittel einen Vergleicher (17) zum Bestimmen der optischen Phasendifferenz zwischen dem reflektieren Licht und dem durchgelassenen Anteil des Eingangslichtes umfassen, wodurch eine Messung des Pegels der Fluidoberfläche (7) unterhalb der Projizier- und Sammeleinrichtung (4) erzeugt wird, wobei die optischen Ausgangsfiberleiter (9, 10) angepaßt sind, um das reflektierte und durchgelassene Eingangslicht zu den Verarbeitungsmitteln auf Lichtwegen vom im wesentlichen gleicher Länge zu leiten.

2. Vorrichtung nach Anspruch 1, gekennzeichnet durch einen optischen Eingangsfiberleiter (3), der die amplitudenmodulierte Lichtquelle (1) mit der Projizier- und Sammeleinrichtung (4) verbindet, und durch Linsenmittel (5), die mit dem Eingangsfiberleiter zwecks Projizierens eines im wesentlichen parallelen Eingangslichtstrahles auf den Strahlenteiler (6) zusammenarbeiten.

3. Vorrichtung nach Anspruch 1 oder 2, dadurch gekennzeichnet, daß die Verarbeitungsmittel einen Photodetektor (13) zum Erzeugen eines elektrischen Signals, das dem reflektierten und durchgelassenen Eingangslicht entspricht, und elektronische Mittel (14—17) zum Verarbeiten des resultierenden elektrischen Signals einschließen, um die optische Phasendifferenz und damit den Regel der Fluidoberfläche unterhalb der Projizier- und Sammeleinrichtung zu bestimmen.

4. Vorrichtung nach Anspruch 3, dadurch gekennzeichnet, daß die elektronischen Verarbeitungsmittel einen ersten Oszillator (14) zum Modulieren der Lichtquelle (1), einen zweiten Oszillator (16) zum Erzeugen eines zweiten Signals mit einer Frequenz, die in der Nähe der modulierten Frequenz des ersten Oszillators liegt, Mittel zum Mischen des zweiten Signals mit dem von dem Photodetektor (13) erzeugten elektrischen Signals, wodurch die Phasendifferenz zwischen den Detektorsignalen erhalten bleibt, während die letzteren in Signale mit niedrigerer Frequenz umgewandelt werden, und einen Vergleicher (17) zum Vergleichen der gemischten Detektorsignale mit einem durch Mischen der beiden Oszillatorsignale abgeleiteten Bezugssignal umfassen.

5. Vorrichtung nach einem der vorhergehenden Ansprüche, gekennzeichnet, durch wenigstens eine zusätzliche Projizier- und Sammeleinrichtung (21, 22) zum Projizieren eines zweiten Strahles aus amplitudenmoduliertem Licht in Richtung auf die Fluidoberfläche (7) und zum Sammeln des von einer Zwischenfläche (25) zwischen dem Fluid (19) und einem zweiten, dichteren Fluid (20) reflektieren Lichtes, wobei der Vergleicher (17) angepaßt ist, die optische Phase des modulierten, von der Zwischenfläche (25) reflektierten Lichtes mit derjenigen des von der Lichtquelle (1) durchgelassenen Eingangslichtes zu vergleichen, um ebenso den Regel (25) des zweiten Fluides relativ zu der zusätslichen Projizier- und Sammeleinrichtung zu überwachen.

6. Vorrichtung nach Anspruch 5, dadurch gekennzeichnet, daß die wenigstens eine zusätzliche Projizier- und Sammeleinrichtung einen zweiten Strahlenteiler (21), der einen Anteil des vom ersten Strahlenteiler (6) durchgelassenen Lichtes in Richtung auf die Fluidoberfläche umlenkt, und zweite Linsenmittel (22) umfaßt, die im wesentlichen koaxial zu dem Strahlenteiler (21) angeordnet sind, um von der Zwischenfläche (25) reflektiertes Licht zu sammeln und das reflektierte Licht in einen dritten optischen Ausgangsfiberleiter (23) zu fokussieren, daß die Mittel (11) zum Fokussieren des durchgelassenen Anteils des Eingangslichtes in dem zweiten optischen Ausgangsfiberleiter (10) so angeordent sind, um mit dem zweiten Strahlenteiler (21) zusammenzuarbeiten und den Anteil des vom zweiten Strahlenteiler durchgelassenen Eingangslichtes in den zweiten optischen Ausgangsfiberleiter (10) zu fokussieren, und daß der dritte optische Ausgangsfiberleiter (23) angeordnet ist, um das reflektierte Licht zu den Verarbeitungsmitteln entlang eines Lichtweges zu leiten, dessen Länge im wesentlichen gleich der Länge der durch den ersten und zweiten optischen Ausgangsfiberleiter (9, 10) definierten Lichtwege ist.

7. Vorrichtung nach einem der vorhergehenden Ansprüche, gekennzeichnet, durch einen Schwimmkörper (24) mit Reflektionsmitteln (26), derart angeordnet, daß er auf der Oberfläche (7) und/oder an der Zwischenfläche (25) in einer Position unterhalb der zugehörigen Projizier-und Sammeleinrichtung (6, 7 oder 21, 22) schwimmt und zwangsgeführt ist, um sich in einer im wesentlichen vertikalen Richtung zu bewegen.

## Revendications

1. Appareil détecteur du niveau d'un fluide comprenant une source de lumière (1), des moyens (4) optiques de projection et de réception pour projeter un signal lumineux dérivé de la source de lumière vers le bas en direction de la surface (7) d'un fluide selon un rayon sensiblement parallèle et sensiblement perpendiculaire à la surface (7) et pour recevoir le signal lumineux réfléchi provenant de ladite surface de fluide, et des moyens (12—17) pour traiter les signaux lumineux de manière à mesurer le niveau de la surface de fluide, caractérisé en ce que la source de lumière est une source lumineuse (1) à modulation d'amplitude pout produire un signal lumineux modulé en amplitude de façon continue, en ce que les moyens de projection et de réception comprennent un diviseur de rayon (6) disposé pour diriger une fraction de la lumière d'entrée provenant de la source de lumière à modulation d'amplitude vers la surface de fluide (7) et transmettre une autre fraction de ladite lumière d'entrée, des moyens de lentille (8) disposés sensiblement coaxialment avec le diviseur de rayon (6) et prévus pour recueillir la lumière réfléchie provenant de la surface de fluide et focaliser la lumière réfléchie sur l'entrée d'une première fibre optique de sortie (9), et des moyens (11) pour focaliser la fraction de lumière d'entrée transmise par le diviseur de rayon et l'envoyer à l'entrée d'une seconde fibre optique de sortie (10) et en ce que les moyens de traitement comprennent des moyens comparateurs (17) pour déterminer la différence de phase optique entre la lumière réfléchie et la fraction transmise de lumière d'entrée, produisant ainsi une mesure du niveau de surface du fluide (7) au-dessous des moyens de projection et de réception (4), lesdites fibres optiques de sortie (9, 10) étant adaptées pour transmettre les lumières réfléchies et transmises vers les moyens de traitment le long de chemins lumineux de longueurs sensiblement égales.

2. Appareil selon la revendication 1, caractérisé par une fibre optique d'entrée (3) reliant la source de lumière à modulation d'amplitude (1) aux moyens de projection et de réception (4), et des moyens de lentille (5) coopérant avec la fibre d'entrée pour projeter un rayon sensiblement parallèle de lumière d'entrée vers le diviseur de rayon (6).

3. Appareil selon la revendication 1 ou la revendication 2, caractérisé en ce que les moyens de traitement comprennent des moyens photodétecteurs (13) pour produite des signaux électriques correspondant à la lumière d'entrée réfléchie et transmise, et des moyens électroniques (14—17) pour traiter les signaux électriques résultants pour déterminer la différence de phase optique et, ainsi, le niveau de la surface de fluide au-dessous des moyens de projection et de réception.

4. Appareil selon la revendication 3, caractérisé en ce que les moyens de traitement électroniques comprennent un premier oscillateur (14) pour moduler la source de lumière (1), un second oscillateur (16) pour produire un second signal ayant une fréquence proche de la fréquence de modulation du premier oscillateur, des moyens pour mélanger le second signal avec les signaux électriques produits par le moyen photodétecteur (13), conservant ainsi la différence de phases entre les signaux de détecteur tout en convertissant ces derniers en signaux de fréquence plus basse, et des moyens comparateurs (17) pour comparer les signaux de détecteur mélangés avec un signal de référence obtenu en mélangeant les signaux des deux oscillateurs.

5. Appareil selon l'une quelconque des revendications précédentes, caractérisé par au moins un moyen additional de projection et de réception (21, 22) pour projeter un second rayon de lumière modulée en amplitude vers la surface de fluide (7) et pour recevoir la lumière réfléchie par un interface (25) entre le fluide (19) et un second fluide plus dense (20), lesdits moyen comparateurs (17) étant disposés pour comparer la phase optique de la lumière modulée et réfléchie provenant de l'interface (25) et celle de la lumière d'entrée transmise provenant de la source de lumière (1) de façon à mesurer également le niveau (25) du second fluide par rapport au moyen additionnel de projection et de réception.

6. Appareil selon la revendication 5, caractérisé en ce que ledit moyen de projection et de réception additionnel comprend un second diviseur de rayon (21) disposé pour diriger une fraction de la lumière d'entrée transmise par le premier diviseur de rayon (6) vers la surface de fluide, et des seconds moyens de lentille (22) disposés substanciellement coaxialement avec le diviseur de rayon (21) et adapté pour recevoir la lumière réfléchie provenant de l'interface (25) et pour focaliser la lumière réfléchie et l'envoyer sur l'entrée d'une troisième fibre optique de sortie (23), lesdits moyens (11) pour focaliser la fraction transmise de lumimère d'entrée dans la seconde-fibre optique de sortie (10) étant adaptés pour coopérer avec le second diviseur de rayon (21) et focaliser sur l'entrée de ladite seconde fibre optique de sortie (10) la fraction de lumière d'entrée transmise par le second diviseur de rayon, ladite troisième fibre optique de sortie (23) étant disposée pour transmettre la lumière réfléchie aux moyens de traitement le long d'un chemin lumineux de longueur sensiblement égale à celle des chemis lumineux définis par la première et la seconde fibre optique de sortie (9, 10).

7. Appareil selon l'une quelconque des revendications précédentes, caractérisé par un flotteur (24) ayant des moyens de réflexion (26) et adapté pour flotter sur la surface de fluide (7) et/ou à l'interface de fluides (25) en une position au-dessous des moyens correspondants de projection et de réception (6, 8 ou 21, 22) et guidé pour se déplacer selon une direction sensiblement verticale.

Fig.1

0 102 390

Fig.2